# EUROPEAN PATENT APPLICATION

(11) **EP 1 529 664 A1**
(43) Date of publication of application: **11.05.2005**
(21) Application number: 03788062.2
(22) Date of filing: 08.08.2003
(51) Int. Cl.: B60C 17/04

(54) **TIRE WHEEL ASSEMBLY**

(30) Priority: 12.08.2002 JP 2002235038
(71) Applicant: THE YOKOHAMA RUBBER CO., LTD., Tokyo 105-8685 (JP)
(72) Inventor: HOTAKA, T., C/O THE YOKOHAMA RUBBER CO., LTD, Hiratsuka-shi, Kanagawa 254-8601 (JP); ISHIKAWA, Y., C/O THE YOKOHAMA RUBBER CO., LTD, Hiratsuka-shi, Kanagawa 254-8601 (JP); OZAWA, O., C/O THE YOKOHAMA RUBBER CO., LTD, Hiratsuka-shi, Kanagawa 254-8601 (JP); SUEFUJI, R., C/O THE YOKOHAMA RUBBER CO., LTD, Hiratsuka-shi, Kanagawa 254-8601 (JP)
(74) Representative: HOFFMANN - EITLE
(86) International application number: PCT/JP2003/010135
(87) International publication number: WO 2004/016453

(57) **Abstract**

A run-flat tire-wheel assembly having, in an inside cavity of the tire/rim, a run-flat support formed by a ring-shaped metal shell and rubber elastic members wherein the contact surfaces of the ring-shaped metal shell and the rubber elastic members are coated with an organic solvent-based adhesive, whereby the bondability between the ring-shaped metal shell and rubber elastic members is improved.

## Description

### TECHNICAL FIELD

The present invention relates to a tire-wheel assembly usable for a pneumatic tire which can be run on in a limited fashion in a damaged or deflated state (hereinafter referred to as a "run-flat tire"), more particularly relates to a tire-wheel assembly improved in bondability of the contact parts of the ring-shaped metal shell and the rubber elastic members of a run-flat support composed of a ring-shaped metal shell and rubber elastic members provided at a tire/rim inside cavity.

### BACKGROUND ART

There is a need for a run-flat pneumatic tire having an emergency running capability enabling it to be run on for a certain distance even when the tire rapidly falls in inside pressure due to a puncture, bursting, etc. during the running of an automobile etc. As such a proposal, for example, Japanese Unexamined Patent Publication (Kokai) No. 10-297226 and Japanese PCT National Publication (Tokuhyo) No. 2001-519279 propose technology for attaching a run-flat support (or an insert) on the rims of the inside cavity of a pneumatic tire, which is usable to support a punctured or otherwise damaged pneumatic tire so as to enable run-flat performance.

The above run-flat support has a ring-shaped member having an outer circumference used as the support surface. Elastic rings are attached to the two legs thereof so that the support is supported on the rims through the elastic rings. The technology for using this run-flat support does not make any special modifications to the wheel/rims of conventional general pneumatic tires and enables the wheel/rims to be used as they are, and therefore has the advantage of enabling the production, processing, and mounting facilities of conventional pneumatic tires to be utilized as they are.

As a traditional method, there is technology reinforcing the sidewalls of tires to enable run-flat running, but this has the problem that sufficient performance cannot be exhibited in tire sizes having large tire sectional heights. Further, as technology for providing a run-flat support at the inside cavity of a tire as explained above, there is one making the insert solid, but this has the problem that since the insert does not have flexibility, the assembling thereof is difficult. Further, there are also proposals for use of special rim structures or special tire structures, but these have the problems that neither the tires nor the wheels have general usability, and therefore an excessive burden is provided on the user.

On the other hand, the technology using a run-flat support is superior in general usability and assembly, but the bonding strength of the contact surfaces of the elastic rings with the ring-shaped member has a large effect on the durability of the run-flat support and greatly governs the durability thereof. Therefore, to improve the durability of the run-flat support in a tire/wheel assembly having a run-flat support and to increase the run-flat distance, it is necessary to improve the bondability of the metal shell surface with rubber elastic members of the support and the durability thereof.

### DISCLOSURE OF INVENTION

Accordingly, the object of the present invention is to improve the bondability between a ring-shaped metal shell and rubber elastic members forming a run-flat support of a run-flat tire-wheel assembly, whereby the durability of the run-flat support and the run-flat performance are improved.

In accordance with the present invention, there is provided a run-flat tire-wheel assembly having a run-flat support formed by a ring-shaped metal shell and rubber elastic members in a tire/rim inside cavity, wherein the contact surfaces of the ring-shaped metal shell and the rubber elastic members are coated with organic solvent-based adhesive, whereby the bondability between the ring-shaped metal shell and the rubber elastic members is improved.

### BRIEF DESCRIPTION OF DRAWINGS

FIG. 1 is a sectional view in the meridian direction of principal parts of an embodiment of the tire-wheel assembly according to the present invention.
FIG. 2 is a sectional view in the meridian direction of principal parts of another embodiment of the tire-wheel assembly according to the present invention.
FIG. 3 is a sectional view in the meridian direction of principal parts of a further embodiment of the tire-wheel assembly according to the present invention.
FIG. 4 is a view of an example of bonding surfaces between the metal shell and the rubber elastic members of the tire-wheel assembly according to the present invention.

### BEST MODE FOR CARRYING OUT THE INVENTION

According to the present invention, it is possible to obtain a tire-wheel assembly having a run-flat support formed by a high rigidity metal shell and rubber elastic members and having the contact surfaces of the metal shell and the rubber elastic members coated with an organic solvent-based adhesive so that the bondability between the ring-shaped metal shell and the rubber elastic members is improved. More preferably, by securing a predetermined bonding area, it is possible to impart, to the run-flat support, a bonding strength sufficient to withstand the load at the time of rim assembling or the time of run-flat running.

The present invention will now be explained in more detail by the embodiments shown in the Figures.

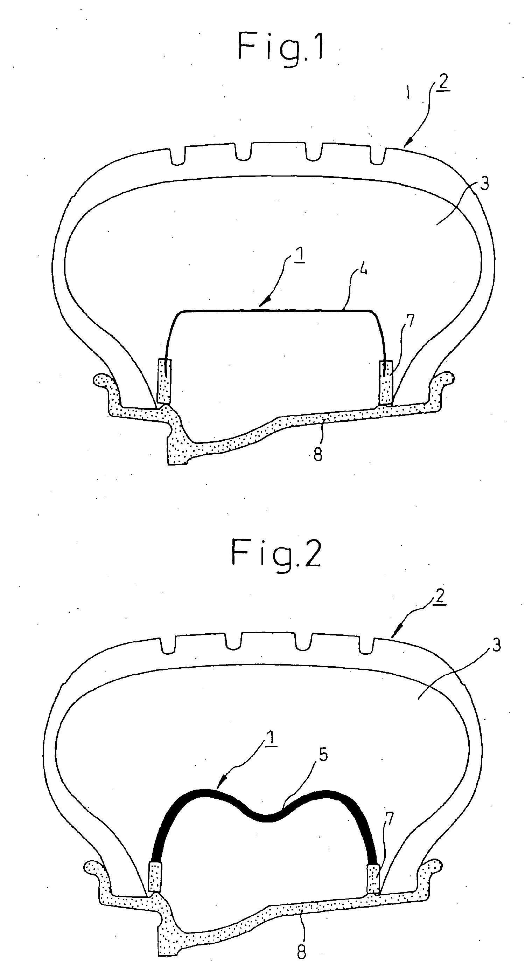

FIG. 1, FIG. 2 and FIG. 3 are sectional views in the meridian direction showing principal parts of representative embodiments of the tire-wheel assembly (wheel) according to the present invention.

For example, as shown in FIG. 1, FIG. 2, and FIG. 3, the run-flat support 1 according to the present invention is formed from a ring-shaped metal shell 4, 5 or 6 inserted in a cavity 3 of a pneumatic tire 2 and rubber elastic members 7. This run-flat support 1 has an outside diameter formed smaller than the inside diameter of the cavity 3 so as to maintain a certain distance from the inside surface of the cavity 3 of the pneumatic tire 2 and has an inside diameter, which is formed to substantially the same dimension as the inside diameter of the bead part of the pneumatic tire. This run-flat support 1 is assembled into the rims 8 of the wheel together with the pneumatic tire 2 in the state inserted into the inside of the pneumatic tire 2, whereby the tire-wheel assembly is formed. When this tire-wheel assembly is attached to an automobile etc. and the pneumatic tire is punctured while running, the punctured and flattened tire 2 is supported at the outer circumference of the run-flat support 1, whereby flat run can be carried out.

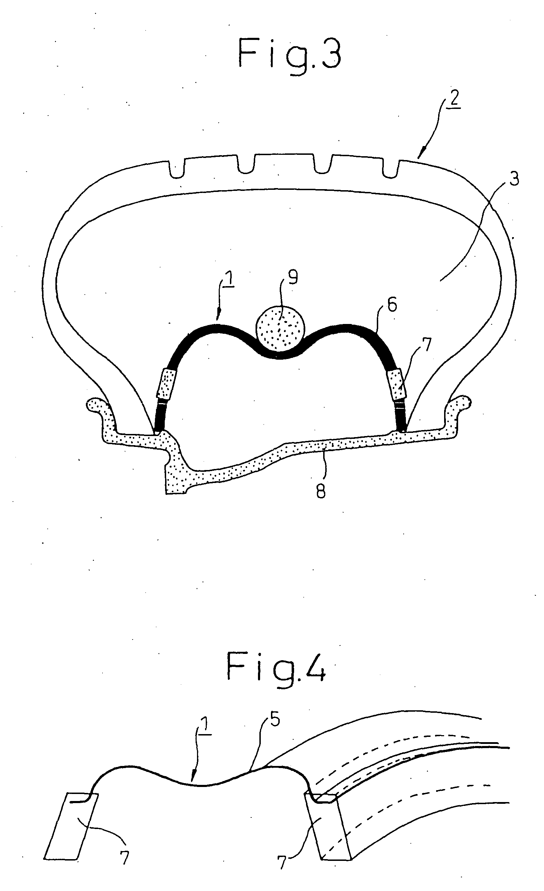

As explained above, the run-flat support 1 of the tire-wheel assembly according to the present invention is composed of the ring-shaped metal shell 4, 5 or 6 and the rubber elastic members 7. The ring-shaped metal shell 4, 5 or 6 forms, at its outside, a continuous support surface for supporting a punctured or otherwise damaged tire and forms legs at its inside left and right side walls. The outside support surface can be made as various shapes, for example, the flat one such as shown in FIG. 1, one where the horizontal cross-section perpendicularly intersecting with the peripheral direction is formed with outwardly projecting curves such as shown in FIG. 2 (the number of the projecting curves in the tire axial direction not being limited to two as shown in FIG. 2 and also possibly being three or more or even single), or one composed of two or more projecting curves with an elastic spring 9 of a circular cross-section arranged in the recessed part as shown in FIG. 3 to impart a shock buffering capability at the time of run-flat running and/or having the ring-shaped metal shell separated by rubber elastic members, so that the side walls of the metal shell directly contact the rims and enable a stable engagement state to be maintained. Even when the support surface is formed in this way, if the bonding between the metal and the rubber elastic members is increased according to the present invention, it is possible to increase the sustained run-flat distance of the tire.

The rubber elastic members are attached to the ends of the two legs of the ring-shaped metal shell (see FIG. 1 or FIG. 2) or in the middles of the two legs (see FIG. 3) and support the ring-shaped metal shell by abutting against the left and right rims in that state. The rubber elastic members are composed of rubber, lighten the shock or vibration received by the ring-shaped metal shell from a punctured or otherwise damaged tire, and act to stop sliding with respect to the rims whereby the ring-shaped metal shell are stably supported on the rims.

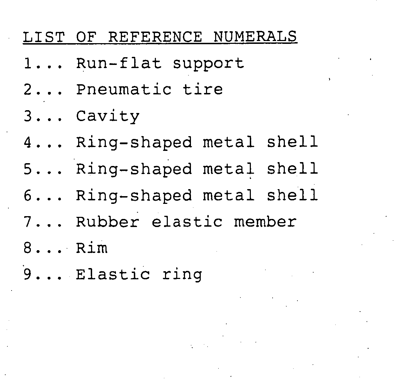

As shown in FIG. 4, the ring-shaped metal shell 5 and the rubber elastic members 7 forming the run-flat support 1 have a strong bonding strength, but preferably should be capable of securing a predetermined bonding area. When the load at the time of rim assembling work or the run-flat running is made dimensionless according to the rim radius R (inch) and the contact area is S (cm²), the ratio S/R should be at least 4.5 cm²/inch, preferably 8 to 20 cm²/inch. Here, the "bonding area" means the bonding area between the metal and the rubber elastic member at one side of the ring-shaped metal shell, that is, the total bonding area once around in the peripheral direction at the front/rear surfaces and the end of the metal shell where the end of the ring-shaped metal shell contacts the rubber elastic member in the horizontal cross-section perpendicularly intersecting the peripheral direction.

Further, the contact surfaces or bonding surfaces between the ring-shaped metal shell 5 and the rubber elastic members 7 should be formed by the axial direction and radial direction. It is more preferable that the two be substantially equal. By this, a structure is formed which can withstand both force in the axial direction and the radial direction occurring at the time of run-flat running.

In FIGS. 1, 2 and 3, the run-flat support 1, the pneumatic tire 2 and the rims 8 are formed in ring shapes coaxially about the wheel shaft (not shown). Note that the dimensions of the metal shell are not particularly limited, but preferably are a thickness of 0.5 to 3.0 mm and a width substantially equal to the interval between the left and right tire bead toes.

The tire-wheel assembly of the present invention supports the weight of the automobile etc. through the punctured or otherwise damaged tire, and therefore, the ring-shaped member 4, 5 are or 6 is comprised of a metal material. Examples of such a metal are iron, stainless steel, aluminum alloy, etc.

The rubber elastic members 7 may be composed of any rubber so long as they can stably support the ring-shaped metal shell. Examples of such a rubber are, for example, natural rubber (NR), isoprene rubber (IR), various types of styrene-butadiene rubber (SBR), various types of polybutadiene rubber (BR), butyl rubber (IIR), various types of acrylonitrile-butadiene copolymer rubber (NBR), various types of ethylene-propylene copolymer rubber (EPDM), etc. may be mentioned.

The rubber composition forming the rubber elastic members of the present invention may further contained an ordinary vulcanizer or cross-linking agent, vulcanization or cross-linking accelerator, various types of oils, an antiaging agent, a filler, a plasticizer, or various other types of additives generally compounded for rubber use. The amounts of these additives can also be made the amounts generally compounded in the past so long as this does not adversely affect the object of the present invention.

In the present invention, to improve the bondability of the ring-shaped metal shell 4, 5 or 6 and the rubber elastic members 7, the contact surfaces of the metal shell 4, 5 or 6 with the rubber elastic members are coated with an organic solvent-based adhesive. Examples of the organic solvent-based adhesive usable in the present invention are a phenol resin-based adhesive, for example, a novolac type phenol resin-based adhesive or phenol resin-based adhesive containing a resol type phenol resin and epoxy modified phenol resin or further a phenol resin-based adhesive containing an unvulcanized acrylonitrile-butadiene copolymer rubber (NBR) or other rubber composition ingredient or the like may be mentioned. Furthermore, it is preferable to coat a vulcanization and bonding primer containing an epoxy resin and resol type phenol resin on the metal surface, to bake it onto the surface, then to coat the above adhesive and bond with the unvulcanized rubber elastic members by vulcanization. Further, as vulcanization adhesives and vulcanization bonding primers, it is possible to use the various adhesives for metal-rubber commercially marketed from Lord Co. etc.

The method for applying the organic solvent-based adhesive to the contact surfaces of the ring-shaped metal shell and the rubber elastic members according to the present invention is not particularly limited. It may be a general method. Preferably, the organic solvent-based adhesive can be coated on the degreased, blasted, or otherwise treated metal surface by a method such as spray coating, brushing, dipping or dripping, if necessary, the excess adhesive is removed, the solvent suitably dried off, then the result assembled with the unvulcanized rubber elastic members and bonded with them by vulcanization by an ordinary method.

### EXAMPLES

The present invention will now be explained further by examples, but needless to say the scope of the present invention is not limited to these Examples.

### Examples 1 and 2 and Comparative Examples 1 and 2

The rubber elastic members having the formulations (parts by weight) and the organic solvent-based adhesives shown in Table I were used to show the advantageous effects of the present invention.

Rubber elastic member samples (dimensions: 5.5 mm thickness x 2.5 cm width x 8 cm length) of the formulations (parts by weight) shown in Table I were prepared. Next, the organic solvent-based adhesives of Table I were coated using brushes on stainless steel SUS304 substrates (thickness: 0.1 mm, width: 2.5 cm, length: 8 cm), assembled on the rubber elastic members, and bonded by vulcanization under conditions of 160°C, 30 minutes, facial pressure 3 MPa. Next, a peeling test was carried out according to JIS K6256. The results are shown in Table I.

**Table I**

| | Comp. Ex. 1 | Ex. 1 | Comp. Ex. 2 | Ex. 2 |
|---|---|---|---|---|
| Formulation (parts by weight) | | | | |
| NIPOL 1042 NBR | 100 | 100 | - | - |
| NR | - | - | 100 | 100 |
| Asahi #60 | 70 | 70 | 70 | 70 |
| Zinc White No. 3 | 5 | 5 | 5 | 5 |
| Stearic acid | 1 | 1 | 1 | 1 |
| FLECTOL TMQ | 1 | 1 | 1 | 1 |
| Sulfur | - | - | 2 | 2 |
| Noccelar CZ-G | - | - | 2 | 2 |
| Parkadox 14/40 (peroxide) | 5 | 5 | - | - |
| Chemlock 205 coating | None | Yes | None | Yes |
| Initial bonding | | | | |
| Peeling force | 100 | 153 | 100 | 181 |
| Rubber coverage (%) | 10 | 100 | 5 | 100 |
| Heat aging bonding*1 | | | | |
| Peeling force | 100 | 184 | 100 | 194 |
| Rubber coverage (%) | 0 | 70 | 0 | 80 |

| | | | | |
|---|---|---|---|---|
| *1: The heat ageing is the value after deterorating under conditions of 80 °C x 1 week Notes of Table I NIPOL 1042: NBR manufactured by Nippon Zeon NR: Natural rubber (RSS#3) Asahi #60: Carbon black (FEF Grade) (N₂SA: 41 m²/g, DBP oil absorption: 121 ml/100 g) manufactured by Asahi Carbon Zinc White No. 3: Zinc oxide manufactured by Seido Chemical Industry Stearic acid: Stearic acid manufactured by NOF Corporation FLECTOL TMQ: Antioxidant manufactured by Flexsys Sulfur: Sulfur manufactured by Karuizawa Refinery Noccelar CZ-G: Vulcanization accelerator manufactured by Ouchi Shinko Chemical Industrial Chemlock 205: Adhesive manufactured by Lord Co. (organic solvent-based adhesive) Parkadox 14/40: Peroxide manufactured by Kayaku Akzo | | | | |

### Method of Measurement of Physical Properties Evaluated

Peeling force: Measured according to the bonding test method for vulcanized rubber and thermoplastic rubber of JIS K6256. Results shown indexed to values of comparative examples as 100. The larger the value, the better the bondability shown.

Rubber coverage (%): Shows rubber coverage on substrate surface after peeling, where no rubber coverage is indicated as 0% and complete rubber coverage is' indicated as 100%.

As shown in Table I, substrates using organic solvent-based adhesives exhibited excellent bondability.

### Examples 3 and 4 and Comparative Example 3

Tire-wheel assemblies of the present invention (Examples 3 and 4) and a conventional tire-wheel assembly based on a comparative example (Comparative Example 3) were prepared with a tire size of 205/55R16 89V and rim size of 16 x 6 1/2JJ.

Further, for the run-flat support of the tire-wheel assemblies, the assembly shown in FIG. 2 was used.

These sample tire-wheel assemblies were tested to evaluate their durability by the measurement method shown below. The results are shown in Table II.

### Durability Test

Test tires were attached to a 2500 cc passenger car, the air pressure in the front right tire was set to 0 kPa, the air pressure in the other three tires was set to 200 kPa, and the car was run at 90 km/hr until breakdown. The results are shown indexed to the value of Comparative Example 3 as 100. The larger the figure shown, the better the durability.

**Table II**

| | Comp. Ex. 3 | Examples | |
|---|---|---|---|
| | | 3 | 4 |
| Durability | 100 | 115 | 118 |
| Notes of Table II Example 3: Bonding method of Example 1 Example 4: Bonding method of Example 2 | | | |

From the results shown in Table II, it is clear that the tire-wheel assembly of the present invention can improve the durability.

### INDUSTRIAL APPLICABILITY

As explained above, the bonding with a metal such as iron, stainless steel, or another metal poor in bondability with rubber alone and a rubber elastic member is extremely difficult. Even if bonding were possible, the bond often would be insufficient strength-wise or the durability would be poor along with the elapse of time. Contrary to this, according to the present invention, as explained above, by coating an organic solvent-based adhesive between the metal shell and the rubber elastic members, it is possible to improve the bondability of the metal and rubber and possible to greatly improve the durability of the run-flat support.

## Claims

1. A run-flat tire-wheel assembly having a run-flat support formed by a ring-shaped metal shell and rubber elastic members in a tire/rim inside cavity, wherein the contact surfaces of the ring-shaped metal shell and the rubber elastic members are coated with an organic solvent-based adhesive, whereby the bondability between the ring-shaped metal shell and the rubber elastic members is improved.

2. A tire-wheel assembly as claimed in claim 1, wherein the rubber elastic members of said run-flat support are arranged between the ring-shaped metal shell and the rims and are structured to support the ring-shaped metal shell.

3. A tire-wheel assembly as claimed in claim 1 or 2, wherein said organic solvent-based adhesive is at least one adhesive selected from the group consisting of phenol resin-based adhesives and rubber containing phenol resin-based adhesives.

4. A tire-wheel assembly as claimed in claim 3, wherein said phenol resin-based adhesive is a novolac type phenol resin-based adhesive, a resol type phenol resin-based adhesive or a phenol resin-based adhesive containing an epoxy modified phenol resin.

5. A tire-wheel assembly as claimed in any one of claims 1 to 4, wherein, when a nominal radius of the tire is R (inch) and a bonding area of the rubber elastic members/metal is S (cm²), the ratio S/R is 4.5 cm²/inch or more.

6. A tire-wheel assembly as claimed in any one of claims 1 to 4, wherein said bonding surface is composed by a substantially axial direction surface and substantially radial direction surface.

7. A run-flat support formed by a ring-shaped metal shell and rubber elastic members, wherein the contact surfaces of the ring-shaped metal shell and the rubber elastic members are coated with an organic solvent-based adhesive, whereby the bondability between the ring-shaped metal shell and the rubber elastic members is improved.
